# EUROPEAN PATENT SPECIFICATION

(11) **EP 0 343 533 B1**
(45) Date of publication and mention of the grant of the patent: **09.08.1995**
(21) Application number: 89109065.6
(22) Date of filing: 19.05.1989
(51) Int. Cl.: G01N 27/406

(54) **Gas sensing element**
Gasfühlelement
Elément sensible au gaz

(30) Priority: 24.05.1988 US 198024; 24.05.1988 US 198028; 24.05.1988 US 198029
(43) Date of publication of application: 29.11.1989
(73) Proprietor: GTE LABORATORIES INCORPORATED, Wilmington Delaware 01901 (US)
(72) Inventor: Wang, Da Yu, Lexington, MA 02173 (US); Kennedy, Daniel T., Burlington, MA 01803 (US); Mac Allister, Burton W.,Jr., Hudson, NH 03051 (US)
(74) Representative: Grünecker, Kinkeldey, Stockmair & Schwanhäusser Anwaltssozietät

(56) References cited:
- EP-A- 0 142 992
- EP-A- 0 259 175
- GB-A- 2 194 846
- US-A- 4 505 807
- US-A- 4 547 281
- US-A- 4 634 514
- US-A- 4 647 364
- TRANSDUCERS '85. 1985 INTERNATIONAL CONFERENCE ON SOLID-STATE SENSORS AND ACTUATORS. DIGEST OF TECHNICAL, pages 333-335, IEEE, New York, US; S. SUZUKI etal.: "Integrated zirconia air-fuel ratio sensor for automotive engine control"

## Description

This application relates to gas sensor element in accordance with the generic clause of claim 1. More particularly, it is concerned with gas sensors employing solid electrolyte material which ionically conducts in the presence of a gas.

Such a gas sensor is already known from document US-A-45 05 807 which describes an oxygen sensor including three plate-like elements disposed in parallel, a heater, an oxygen pump element with electrodes, an oxygen concentration cell element with electrodes and an insulating board disposed between the first two elements having a hole bored therethrough at a position between the opposing electrodes of the first two elements so as to defined a cavity therebetween, whereby said insulating board further has at least one passage communicating said cavity to the outside of said oxygen sensor.

Also in documents US-A-4647364 ; Transmicers' 85. 1985 International Conference on solid-state sensors and actuators; Digest of Technical Papers, p. 333-335, IEEE, New York, US, S. Suzuki et al.: "Integrated Zirconia air-fuel ratio sensor for automotive engine control" ; US-A-46 34514 as well as EP-A-0 142 992 ; gas sensor elements are disclosed.

Document US-A-4 547 281 discloses a gas concentration sensing or pumping device that is formed of a body of solid electrolyte material which exhibits ionic conduction when the concentration of gas is different between first and second surfaces of the body or which, upon application of a voltage across the body, will cause gas on the one side of the body to be pumped to the other side. The output current measures the gas concentration passing through the body.

Various techniques and apparatus have been developed for determining the concentration of individual gases, such as oxygen, in a gas mixture, such as an exhaust gas. With some of these techniques it is difficult to determine the oxygen concentration in the range from about 0.1% to 20%. With certain types of gas sensors it is difficult to maintain accuracy over a period of time. Some techniques provide output information which varies logarithmically rather than linearly with the concentration of oxygen in the gas mixture. Some sensors are insensitive to slight changes in the partial pressure of oxygen, and therefore subject to inaccuracy. Other techniques involve complex electronic circuitry for controlling the operation of the sensing apparatus and for carrying out the measurements.

In one technique a solid electrolyte material which exhibits ionic conduction in the presence of oxygen is employed in an electrochemical gas pump. The oxygen concentration in the gas mixture is determined by the diffusion-limited current flow through the solid electrolyte material. This technique provides a signal output which is linearly proportional to the oxygen concentration in the gas mixture. A simple power supply provides a constant voltage to the electrodes of the pump. A series resistor is used to generate an output signal which is proportional to the concentration of oxygen in the gas being analyzed.

Sensors of this type require energy in the form of an applied voltage. The applied voltage needed is a function of current density, temperature and oxygen concentration. If the applied voltage is low or the temperature is low or the oxygen concentration is high, the relationship observed between the pumping current and the oxygen concentration is non-linear. If the applied voltage is too high or the temperature is too high or the oxygen concentration is low, other oxygen-containing ingredients such as H₂O and CO₂ or the solid electrolyte material itself may dissociate contributing to faulty current in the output signal. In addition the pumping of the oxygen through the solid electrolyte material consumes energy, and the electrolyte ohmic polarization of the material is also a function of temperature and the current density. Thus, at high current density or low temperature extra voltage is needed to overcome the resistance of the electrolyte material.

Because of these problems, previously available sensors based on this technique have a limited temperature range of operation. In addition the electrodes of some sensors are exposed to gas flow. After a period of use the electrodes can shift the amount of applied voltage required, and thus lead to errors in the output signal. Heating elements are required in order to maintain a proper operating temperature for the sensor. Heating elements tend to have short lifetimes due to the mechanical instability of their materials at the high operating temperature. Certain devices have pressure-dependent output signals because of the diffusion mechanism involved in the operation of the gas pump. Most of the devices presently available require fairly high voltage in order to be operable, thus creating the possibility of faulty dissocation currents at the resulting high temperature. It is an object of the present invention to overcome the aforementioned problems.

This object is met by the characterizing features of claim 1.

A gas sensor element in accordance with the present invention comprises a body of solid electrolyte material exhibiting ion conduction in the presence of a gas to be detected. A first chamber is located within the body with passage between the first chamber and the exterior of the body. A second chamber within the body is spaced from the first chamber. Passage is provided between the second chamber and the exterior of the body. A first electrode has a tab portion facing the first chamber, and a second electrode has a tab portion facing the second chamber. The gas being detected is pumped from one chamber to the other chamber through the intervening solid electrolyte material upon the application of a voltage between the first and second electrodes.

A gas sensing assembly in accordance with the present invention includes a gas sensor element and two ceramic heaters. The gas sensor element comprises a body of solid electrolyte material which exhibits ion conduction in the presence of a gas to be detected. The body is of generally elongated rectangular parallelepiped configuration having a major upper surface and a major lower surface. The body contains a first chamber located below the upper surface. A second chamber is located above the lower surface and directly below the first chamber with material of the body intervening between the first and second chambers. Passage is provided from the first chamber to the exterior of the body, and passage is provided from the second chamber to the exterior of the body. A first electrode has a tab portion facing the first chamber, and a second electrode has a tab portion facing the second chamber. Each of the ceramic heaters comprises a substrate of silicon nitride material of generally elongated rectangular configuration having parallel first and second flat, planar major surfaces. A thin layer of conductive material is adherent to the first major surface of the substrate in a pattern to form a resistance heating element and conductive leads thereto. One of the ceramic heaters is assembled in heat transmitting relationship with the gas sensor element with the second major surface of the substrate of the ceramic heater facing the major upper surface of the body of the gas sensor element. The other ceramic heater is assembled in heat transmitting relationship with the gas sensor element with the second major surface of the substrate of the ceramic heater facing the major lower surface of the body of the gas sensor element.

Gas sensing apparatus in accordance with the present invention comprises a gas sensor element including a body of solid electrolyte material which exhibits ion conduction in the presence of a gas to be detected. The body is of generally elongated rectangular parallelepiped configuration and has a gas pump adjacent to one end thereof. Electrical leads connected to electrodes of the gas pump extend from the other end of the gas sensor element. The apparatus also includes a ceramic heater of generally elongated rectangular parallelepiped configuration having a resistance heating element adjacent to one end. Electrical leads connected to the resistance heating element extend from the other end. A mounting collar supports the gas sensor element and the ceramic heater with the ceramic heater in heat transmitting relationship with the gas sensor element. The one end of the body of the gas sensor element containing the gas pump and the one end of the ceramic heater containing the resistance heating element are positioned on one side of the mounting collar. The electrical leads lie on the opposite side of the mounting collar. A shield member encloses the portions of the gas sensor element and ceramic heater positioned on the one side of the mounting collar. The shield member is in contact with the mounting collar and forms a gas-tight seal therewith. The shield member has at least one aperture therein to permit the gas to be analyzed to enter the test chamber formed by the shield member and mounting collar. External connector means are connected to the electrical leads from the gas sensor element and the ceramic heater for permitting electrical connections to be made thereto.

In the drawings:
Fig. 1 is an exploded view of the components of a gas sensor element in accordance with the present invention;
Fig. 2 is a perspective view of an assembled gas sensor element in accordance with the present invention;
Fig. 3 is a perspective view of a ceramic heater employed in apparatus in accordance with the present invention;
Fig. 4 is an elevational view in cross-section of gas sensing apparatus in accordance with the present invention;
Fig. 5 is a perspective view of a portion of the apparatus of Fig. 4;
Fig. 6 is a schematic drawing of the electrical circuitry employed in conjunction with the apparatus of Fig. 4; and
Fig. 7 is a graph illustrating curves of the output measurements of gas sensing apparatus at various concentrations of oxygen at different temperatures.

For a better understanding of the present invention, together with other and further objects, advantages, and capabilities thereof, reference is made to the following disclosure and appended claims in connection with the above-described drawings.

The sensor element as described herein employs a body of a solid electrolyte material which exhibits ionic conduction in the presence of a gas, specifically oxygen. The material which is well known for providing this phenomenon with oxygen is yttria (Y₂O₃)-stabilized zirconia (ZrO₂).

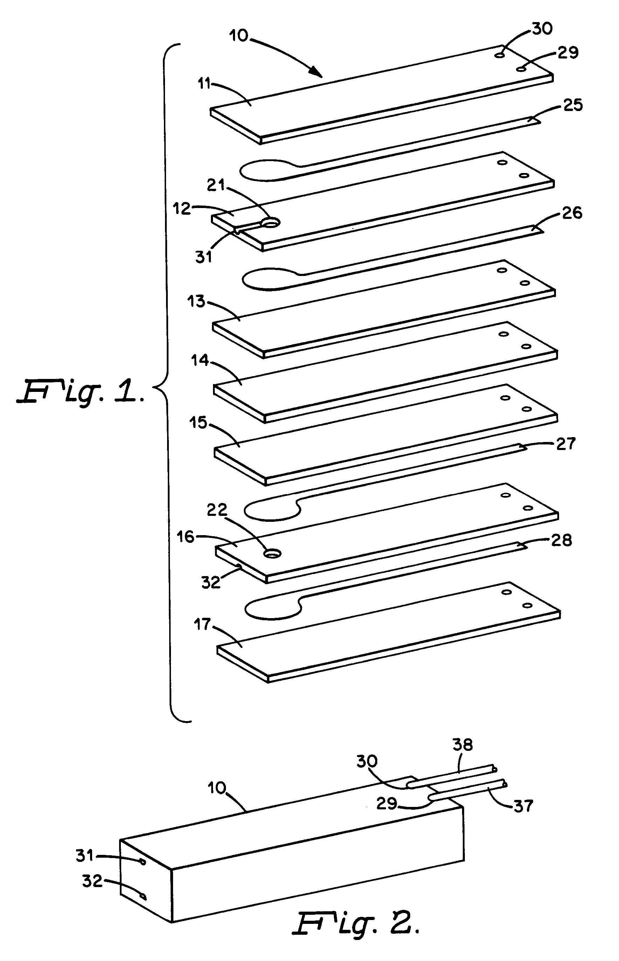

The sensor element 10 is illustrated in an exploded view in Fig. 1. The sensor element 10 is composed of seven layers or laminations of yttria-stabilized zirconia 11-17. The laminations 11-17 are fabricated from yttria-stabilized zirconia powder which is a mixture of 92 mole percent of zirconia powder and 8 mole percent of yttria powder. Specifically the mixed powder is designated as TZ-8Y yttria-stabilized zirconia powder purchased from Toyo Soda USA, Inc., Atlanta, Georgia. A slurry is prepared from the yttria-stabilized zirconia powder and a binder of polyvinyl butyral, specifically Cerbind #73216 binder solution from Tam Ceramics, Inc., Niagara Falls, New York. The slurry is 54% by weight powder and 46% by weight binder. The mixture is ball milled for 18 hours in a milling media of zirconia balls. After mixing, the slurry is exposed to a vacuum of 4·10³ Pa (30 mm Hg) for 1-2 minutes to ensure that no trapped air remains in the slurry. The slurry is cast into a film with a doctor blade setting of 1·3·10⁻³ m (52 mils). The film is dried in open air for 3-4 hours, and after drying the film thickness is approximately 0,25 - 0,3 · 10⁻³ m (10-12 mils). The film is cut into suitable dimensions for the rectangular laminations, for example 0,048 m (1.9 inches) by 0,010 m (.426) inch.

Holes or openings 21 and 22 which will form gas chambers in the sensor element are produced as by punching through two laminations, the next-to-the-uppermost lamination 12 and the next-to-the-lowermost lamination 16. The openings may, for example, be 0.006 m (.250 inch) in diameter.

Electrodes are formed on certain of the laminations. The electrodes are of a porous conductive material which adsorbs oxygen and acts as a catalyst in dissociating oxygen into ions. The particular material used is platinum (Pt). Electrodes 25, 26, 27, and 28 are formed on the uppermost lamination 11, the lamination next below the next-to-the-uppermost lamination 13, the next-above the next-to-the-lowermost lamination 15, and the lowermost lamination 17, respectively. The electrodes are formed on the laminations by screen printing platinum ink onto the appropriate surface. Specifically the platinum ink used is designated as A4338 and is purchased from Engelhard Corp., East Newark, New Jersey. The ink is applied through a #325 mesh screen.

Each of the electrodes has an enlarged tab portion at one end which is the same size as the chamber openings 21 and 22. The tabs are located in the laminations so that the tabs of the electrodes of each set face each other across the appropriate chamber of the assembly. The electrodes extend along the length of the associated laminations and terminate at end portions of the laminations so as to be adjacent to openings or holes labelled 29 and 30. The holes 29 and 30 are formed in the laminations after assembly of the laminations as will be discussed hereinbelow. The electrodes are arranged on the associated laminations such that the upper electrodes 25 and 26 constituting one set are accessible only at openings 29 and electrodes 27 and 28 constituting a second set are accessible only at openings 30.

Passage between each chamber and the exterior of the sensor element for the gas being analyzed is provided by orifices 31 and 32 which are formed between the chambers 21 and 22, respectively, and the exterior during the laminating process. Alternatively, passage between each of the chambers 21 and 22 and the exterior of the sensor element may be provided by employing uppermost and lowermost laminations 11 and 17 which are porous in the regions above and below the chambers 21 and 22, respectively. In order to form the orifices 31 and 32 a plastic wire or other suitable filamentary material which is easily expended is placed between laminations 11 and 12 and between laminations 16 and 17 as the laminations are stacked for laminating. Lamination is performed at a temperature of 60°C with the laminations pressed together under a pressure of 6,8 · 10⁶ N/m² (1000 pounds per square inch) in a vacuum of 4·10³ Pa (30 mm Hg) for a period of from 10 to 15 minutes. Disks of ashless filter paper are placed inside the openings 21 and 22 before the laminating process to prevent the walls of the chambers from collapsing during the laminating process.

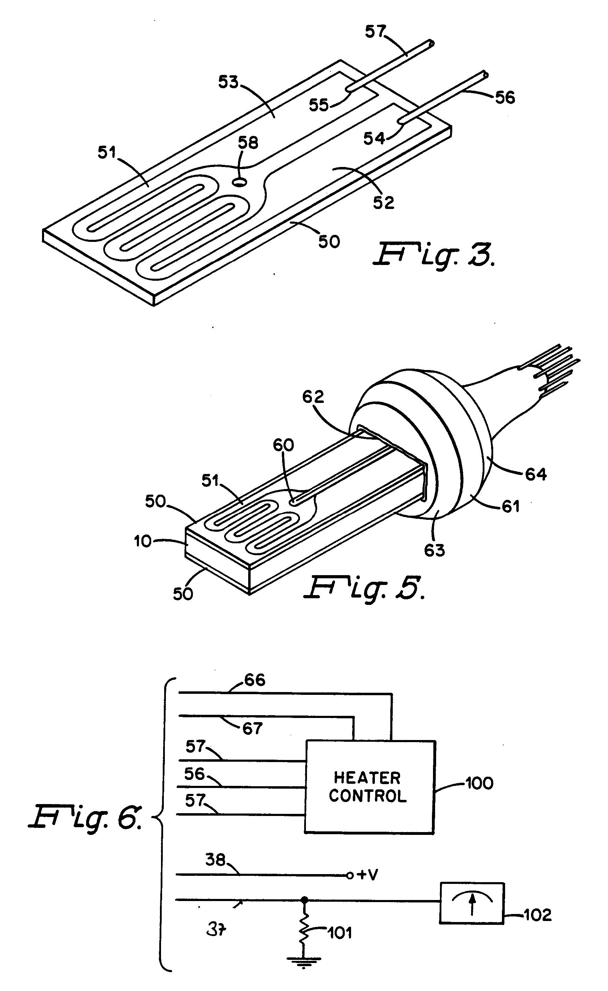

After lamination the orifices 31 and 32 (Fig. 2) from the chambers 21 and 22, respectively, to the edge surface of the body are formed by burning away the filamentary material placed prior to lamination. The holes 29 and 30 are drilled through the laminated stack or body. The resulting body which is in the shape of a generally rectangular parallelepiped is then subjected to a bake out and sintering procedure. The temperature of the body is raised from room temperature to 400°C over a period of 15 hours, and from 400°C to 1500°C over a period of 2 hours. The body is heated for 1 hour at 1500°C, and then cooled to room temperature over a 2 hour period. This process is carried out in open air. In the completed gas sensor element as illustrated in Fig. 2 each of the chambers 21 and 22 is approximately 0,004 m (0.175 inch) in diameter and 6·10⁻⁵ m (0.0025 inch) in height. The orifices 31 and 32 are about 4·10⁻⁵ m (0.0015 inch) in diameter and about 1,3·10⁻³ m (0.05 inch) in length from the chamber to the exterior edge surface of the sensor element.

As illustrated in Fig. 2 lead wire 37 which may be of 0,13 mm (5 mil) silver wire is attached to the two upper electrodes 25 and 26 through openings 29. Similarly lead wire 38 is attached to the two lower electrodes 27 and 28 through openings 30. The lead wires 37 and 38 are looped through their respective holes 29 and 30. Platinum paste is applied to ensure good electrical contact. The lead wires 37 and 38 are covered with fiberglass tubing for insulation and protection.

The gas sensor element 10 of Figs. 1 and 2 forms an oxygen pump adjacent to the narrow edge surface at one end of the sensor element. A voltage applied between electrodes 25 and 26 of one set and electrodes 27 and 28 of the other set causes oxygen entering one of chambers 21 or 22 by way of orifice 31 or 32, respectively, to ionize. Ions flow through the yttria-stabilized zirconia to the other chamber. The current flows is a measure of the concentration of oxygen in the gas mixture to which the gas sensor element is exposed.

The apparatus employs two ceramic heaters 50 which are assembled with the gas sensor element 10. Each ceramic heater 50 as illustrated in Fig. 3 employs a substrate of a rectangular piece of silicon nitride ceramic material. The substrate is approximately 0,03 m (1.2 inches) by 0,008 m (0.3 inches) and is .1·10⁻³ m (40 mils) thick. The silicon nitride material is densified silicon nitride. Specifically, the material is formed by employing Al₂O₃, Y₂O₃ or MgO as a densification aid and may, for example, be formed as described in U.S. Patents No. 4,383,958, 4,603,116 and 4,608,354.

A resistance heating element 51 in a zig-zag pattern and conductive leads 52 and 53 therefrom are formed on a flat major surface of the ceramic substrate by screen printing. For example, platinum ink #5544 from Electro-Science Labs, King of Prussia, Pennsylvania, is applied through #325 mesh screen. After the pattern of heating element 51 and leads 52 and 53 is applied, the substrates are fired in air. The temperature is raised from room temperature to 1250°C over a period of 2 hours, firing at 1250°C is carried on for 10 minutes, and cooling to room temperature is over a period of 2 hours. Holes 54 and 55 are formed in the printed conductors 52 and 53, respectively, at the end of the heater substrate which is spaced from the resistance heating element 51. Wire leads 56 and 57 of 5 mil silver wire pass through the holes 54 and 55 and make electrical contact to the conductors 52 and 53, respectively. A silver paste is applied to ensure good physical and electrical contact, and the wire leads 56 and 57 are protected with fiberglass sleeving. In some of the ceramic heaters an opening 58 is made through the substrate in a region not coated by the conductive material but closely adjacent to the resistance heating element 51.

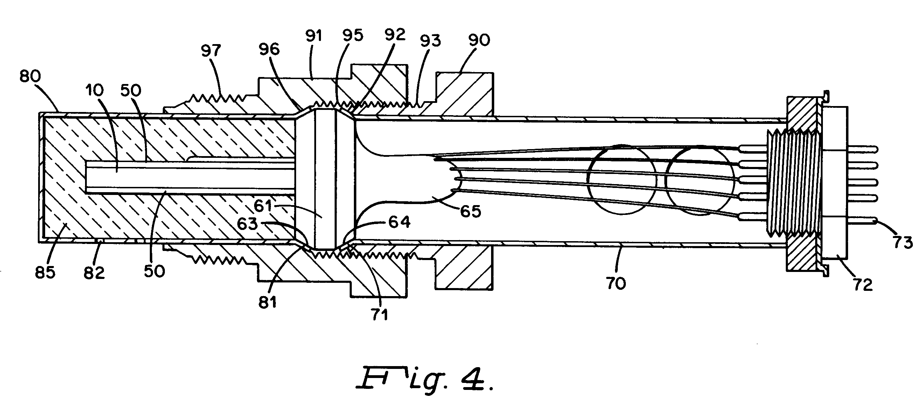

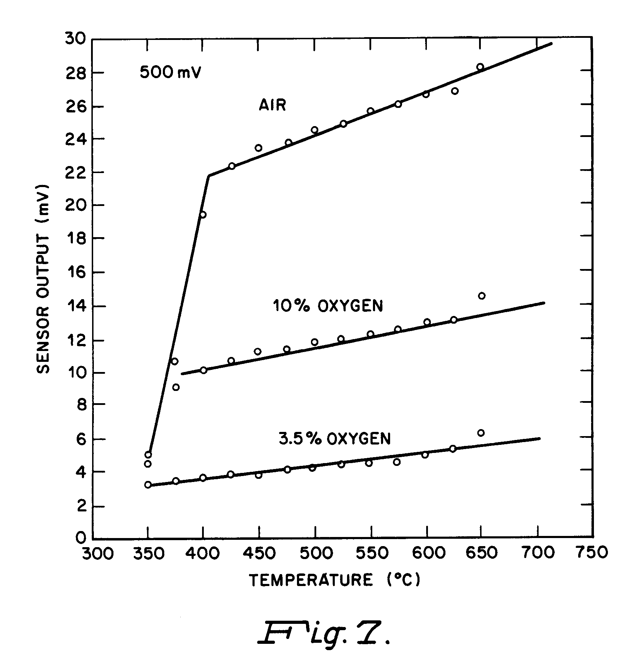

Fig. 4 illustrates gas sensing apparatus employing a gas sensor element 10 sandwiched between two ceramic heaters 50 and supported in a housing which is adapted for mounting as in an engine exhaust line from an internal combustion engine. As illustrated in Fig. 5, the gas sensor element 10, the two ceramic heaters 50, and also a thermocouple 60 are mounted in a mounting collar 61. The flat major surface of each ceramic heater 50 opposite the surface containing the heating element 51 is in close physical and heat transmitting contact with a major surface of the gas sensor element 10. The mounting collar 61 is fabricated from an insulating ceramic for example #502-600 machinable ceramic purchased from Leeds and Northrop Company, Philadelphia, Pennsylvania. The mounting collar 61 is of circular cross-section and has chamfered or tapered edges 63 and 64 on the forward and rearward sides of its periphery.

The gas sensor element 10 and ceramic heaters 50 extend through a central opening 62 in the mounting collar 61. The resistance heater elements at the ends of the ceramic heaters 50 are closely adjacent to the gas pump at the end of the gas sensor element 10 and lie on the forward side of the mounting collar 61. The opposite ends of the gas sensor element and the ceramic heaters which have the lead wires attached thereto extend from the rearward side of the mounting collar 61. The thermocouple 60 fits within the opening 58 in the uppermost ceramic heater 60 and its lead wires 66 and 67 pass through the opening 62 to the rearward side of the mounting collar 61.

The assembled elements are sealed within the opening 62 of the ceramic mounting collar 61 by a suitable ceramic cement 65, for example standard 3333 foreign joint cement purchased from Leeds and Northrop Company, Philadelphia, Pennsylvania. After the cement is applied, it is air dried for 24 hours at room temperature followed by a 1 hour anneal in an oven at 100°C. The cured ceramic cement 65 is in the form of a mass completely surrounding the ends of the assembled elements on the rearward side of the mounting collar 61. The cement 65 adheres to the surface of the mounting collar forming a gas-tight seal around the elements and sealing the opening 62. The lead wires from the gas sensor element, ceramic heaters, and thermocouple pass through the cement 65 without disrupting the gas-tight seal.

A hollow cylindrical housing member 70 has an outwardly flared portion or flange 71 at one end. A standard electrical connector 72 with seven contact members 73 extending therethrough is mounted at the other end of the housing member 70. The lead wires from the assembled elements pass through the hollow cylindrical member and are connected to the contacts 73 of the connector 72 to enable electrical connections to be made thereto. The flange 71 at the end of the housing member 70 abuts the chamfered surface 64 of the mounting collar 61 and is held in close physical contact therewith as will be explained hereinbelow.

The active portions of the assembled elements containing the gas pump and resistance heaters which extend from the forward side of the mounting collar 61 are encircled by a shield member 80. The shield member which preferably may be of stainless steel is of cylindrical shape and is closed at one end. The other end has an outwardly flared portion or flange 81 for mating with the chamfered surface 63 of the mounting collar 61. The shield member 80 has one or more apertures 82 through its wall in order to enable the gas to be analyzed to enter the enclosed test chamber formed by the shield member 80 and mounting collar 61.

The test chamber is filled with porous thermal insulation 85 which encircles the portions of the assembled elements protruding beyond the forward surface of the mounting collar. The insulation 85 is preformed by wrapping fiberglass material around a dummy sensor assembly and then wrapping the fiberglass with fiberglass electrical tape. The fiberglass wrapped dummy sensor assembly is inserted into the shield member. This assemblage is fired at 650°C for one-half hour to burn away the binders within the fiberglass insulation and tape. The dummy sensor assembly is then removed and the shield member 80 with the insulation 85 in place is assembled over the gas sensor assembly with the flange portion 81 abutting the chamfered edge 63 of the mounting collar 61.

The housing member 70 and the shield member 80 are both clamped in position against the mounting collar 61 by a clamping arrangement of a gland nut 90 and a housing nut 91. The gland nut 90 (which is placed over the housing member 70 prior to attachment of the electrical connector 72) has a chamfered or tapered surface 92 for abutting the flange 71 of the housing member 70. The gland nut has external threads 93 in the forward region adjacent to the tapered surface 92. The housing nut 91 has internal threads 95 at its rearward end for mating with the external threads 93 of the gland nut, and in its middle region has a tapered surface 96 for abutting the flange 81 of the shield member 80.

The gland nut 90 and the housing nut 91 are threaded together to urge the housing member 70 and the shield member 80 against the opposite sides of the mounting collar 61. The tapered surface 92 of the gland nut 90 clamps the flange 71 of the housing member 70 against the chamfered surface 64 of the mounting collar 61, and the tapered surface 96 of the housing nut 91 clamps the flange 81 of the shield member 80 against the chamfered surface 63 of the mounting collar 61. The physical connections between the housing nut 91, the shield member 80, and the mounting collar 61 are gas-tight seals. The housing nut 91 has a threaded external surface 97 at the forward end for mounting the apparatus with the shield member 80 protruding into a gaseous atmosphere to be analyzed.

Fig. 6 is a schematic diagram illustrating the electrical connections to the apparatus for measuring the concentration of oxygen in a gas mixture. The leads 56 and 57 from the two ceramic heaters 50 and the leads 66 and 67 from the thermocouple 60 are connected to a heater control 100. (Leads 56 are shown connected in common.) The heater control provides electrical power to the ceramic heaters 50 at from 24 to 30 volts AC. Their temperature is monitored by the thermocouple 60, and the heater control 100 operates to maintain the gas sensor assembly at the desired temperature level for operation of the apparatus. One of the leads 38 of the gas sensor element 10 is connected to a positive source of voltage (about 3 volts DC) and the other lead 37 is connected through a series resistor 101 to ground. The potential across the resistor 101 is measured by a suitable instrument 102 to determine the current flow through the gas sensor element 10.

Fig. 7 is a plot of the measured output of a gas sensor element as described in detail hereinabove at different operating temperatures. The applied voltage is such as to produce 500 millivolts of applied polarization across the two sets of electrodes and a series resistor 101 of 100 ohms. The apparatus as described can measure oxygen concentration between 0.1% and air at temperatures from 450°C to 800°C. The apparatus is relatively simple and uncomplicated and may be approximately of standard automobile spark plug size and configuration. As can be seen the measured output current is linear with respect to the concentration of oxygen in the exhaust gas being analyzed. With the device as described the limiting current density is kept low, specifically at 450°C with air as the reference gas the current density range is between 0.8 mA/cm² and 3mA/cm². Since the apparatus requires only 500 millivolts of applied polarization, no reduction of the solid electrolyte material will occur.

The use of the double electrode design with a set of two electrodes at each chamber provides high pumping efficiency. The electrodes are completely enclosed except at the chambers with only tiny orifices providing access of the gases to the exposed electrode surface. Thus the electrodes are well protected from gas erosion and contamination. The silicon nitride heaters provide temperature stability during operation of the gas pump. The performance and service life of the silicon nitride heaters is superior by virtue of the thermal shock resistance of the silicon nitride material.

The gas sensor assembly may include a thermocouple which is located in good position for monitoring the heat produced by the ceramic heaters and transmitted to the gas sensor element. Different modifications of the shield member may be employed. For pressure dependent measurements and rapid response to changes in oxygen concentration in the gas several apertures are provided in the portion of the shield member exposed to the exhaust gas. For pressure independent measurements and slower response to changes in oxygen concentration, a single aperture is provided in the shield member rearwardly of the forward end of the housing nut with passage provided between the housing nut and the shield member for the exhaust gas being tested.

While there has been shown and described what is considered a preferred embodiment of the present invention, it will be obvious to those skilled in the art that various changes and modifications may be made therein without departing from the invention as defined by the appended claims.

## Claims

1. A gas sensor element comprising
a body (10) of solid electrolyte material exhibiting ion conduction in the presence of a gas to be detected;
a first chamber (21) within said body; a passage (31) between said first chamber and the exterior of the body;
and first and second electrode means (25-28) having tab portions
**characterized by**
a second chamber (22) within said body spaced from said first chamber;
a passage (32) between said second chamber and the exterior of the body;
said first electrode means (25,26) having a tab portion facing said first chamber (21);
said second electrode means (27,28) having a tab portion facing said second chamber, whereby said first electrode means includes a first set of two electrodes (25,26), a tab portion of each facing each other across said first chamber;
said second electrode means includes a second set of two electrodes (27,28), a tab portion of each facing each other across said second chamber; and
said gas being pumped from one chamber (21) to the other (22) through the intervening solid electrolyte material upon application of a voltage between said first set of electrodes and said second set of electrodes.

2. A gas sensor element in accordance with claim 1, wherein
said body (10) is of generally rectangular parallelepiped configuration having a major upper surface (11) and a major lower surface (17);
said first chamber (21) is located below said upper surface (11), and said second chamber is located above said lower surface (17) and directly below said first chamber with material of said body intervening between said first and second chambers;
said first passage is formed as a first orifice (31) which extends from said first chamber parallel to said major surfaces and terminates at an edge surface normal to said major surfaces;
said second passage is formed as a second orifice (32) which extends from said second chamber parallel to said major surfaces and terminates at an edge surface normal to said major surfaces;
said two electrodes (25,26) of said first set and said two electrodes (27,28) of said second set are flat and planar and lie parallel to said major surfaces;
one of the electrodes (25) of said first set has said tab portion disposed across the upper wall surface of said first chamber, and the other of the electrodes (26) of said first set has said tab portion disposed across the lower wall surface of said first chamber; and
one of the electrodes (27) of said second set has said tab portion disposed across the upper wall surface of said second chamber, and the other of the electrodes (28) of said second set has said tab portion disposed across the lower wall surface of said second chamber.

3. A gas sensor element in accordance with claim 2, wherein
each of said chambers (21,22) is located adjacent to one of the narrower of the edge surfaces of said body;
each of said electrodes (25,26,27,28) extends from said tab portion and terminates adjacent to the other of the narrower of the edge surfaces of said body;
the two electrodes of the first set terminate closely adjacent to each other for permitting a common electrical connection (29) to be made thereto; and
the two electrodes of the second set terminate closely adjacent to each other for permitting a common electrical connection (30) to be made thereto.

4. A gas sensor element in accordance with claim 3, wherein
said solid electrolyte material is yttria-stabilized zirconia.

5. A gas sensor element in accordance with claim 3, wherein
said electrodes are a porous film of a conductive material which catalyzes the ionization of the gas to be detected.

6. A gas sensor element in accordance with claim 5, wherein
said conductive material of said electrodes is platinum.

7. A gas sensor element in accordance with claims 1 or 3, wherein
said body is a unitary body (10) of laminations of a solid electrolyte material which ionically conducts oxygen;
each of said laminations being of generally rectangular parallelepiped configuration with a major upper surface and a major lower surface;
the next-to-the-uppermost lamination (12) having an opening therethrough from its major upper surface to its major lower surface defining said first chamber (21);
the uppermost lamination (11) having an electrode (25) of said first set of electrodes (25,26) of a layer of conductive material adherent to the major lower surface thereof, said electrode (25) having said tab portion disposed across said opening (21) in the next-to-the-uppermost lamination;
the lamination next-below (13) the next-to-the-uppermost lamination having an electrode (26) of said first set of electrodes (25,26) of a layer of conductive material adherent to the upper major surface thereof, said electrode (26) having a tab portion disposed across said opening in the next-to-the-uppermost lamination;
the next-to-lowermost lamination (16) having an opening (22) therethrough from its major upper surface to its major lower surface located directly below said opening (22) in the next-to-the-uppermost lamination, defining said second chamber (22);
the lowermost lamination having an electrode (28) of said second set of electrodes (27,28) of an adherent layer of conductive material adherent to the major upper surface thereof, said electrode (28) having a tab portion disposed across said opening in the next-to-the-lowermost lamination;
the lamination next-above (15) the next-to-the-lowermost lamination having an electrode (27) of a layer of said second set of electrodes (27,28) of conductive material adherent to the lower major surface thereof, said electrode (27) having a tab portion disposed across said opening (22) in the next-to-the lowermost lamination;
said first orifice (31) extending from said first chamber next-to-the-uppermost (12) lamination to an edge surface of the lamination; and
said second orifice (32) extending from said second chamber in the next-to-the lowermost (16) lamination to an edge surface of the lamination.

8. A gas sensor element in accordance with claim 7, wherein
said chambers (21,22) are generally cylindrical of about 0.44mm (0.0175 inch) in diameter and 0.06mm (0.0025 inch) in heighth; and
said orifices (31,32) are about 0.04mm (0.0015 inch) in diameter and about 1.27 (0.05 inch) in length from the opening to the exterior edge surface.

9. A gas sensor element of one of claims 1 to 8, further comprising
two ceramic heaters (50) each comprising a substrate (50) of silicon nitride material of generally elongated rectangular configuration having parallel first and second flat planar major surfaces, and
a thin layer of conductive material (51) adherent to said first major surface of the substrate (50) in a pattern to form a resistance heating element and conductive leads thereto;
one of said ceramic heaters being assembled in heat transmitting relationship with said gas sensor element (10) with the second major surface of the substrate of the ceramic heater facing the major upper surface of the body of the gas sensor element; and
the other of said ceramic heaters (50) being assembled in heat transmitting relationship with said gas sensor element with the second major surface of the substrate of the ceramic heater facing the major lower surface of the body of the gas sensor element.

10. A gas sensor element in accordance with claim 9 or 3, wherein
said thin layer of conductive material (51) is adjacent to one end of the ceramic heaters thereof and said conductive leads (56,57) extending from the resistance heating element to the other end of the substrate; and
said ceramic heaters (50) being assembled with said gas sensor element (10) with said one end of the substrates of the ceramic heaters being positioned adjacent to said one of the narrower of the edge surfaces of the body of the gas sensor element.

11. A gas sensor element of one of claims 1 to 8, further comprising a ceramic heater having
a substrate (50) of silicon nitride material having a flat, planar major surface; and
a thin layer (51) of conductive material adherent to said major surface of the substrate in a pattern to form a resistance heating element and conductive leads thereto.

12. A gas sensor element of claim 11, whereby said substrate is of a generally elongated rectangular configuration and the conductive leads extend from the resistance heating element adjacent to the other end of the substrate.

13. A gas sensor element in accordance with claim 12, wherein
said substrate of said ceramic heater is of densified silicon nitride.

14. A gas sensor element in accordance with claim 13, wherein
said conductive material is platinum screened and fired on said major surface of the substrate.

15. A gas sensor element in accordance with claim 13, further comprising
a mounting collar (61) supporting said gas sensor element and said ceramic heater (50) with said ceramic heater in a heat transmitting relationship with said gas sensor element (10), said one end of said body of the gas sensor element and said one end of the ceramic heater being positioned on one side of the mounting collar (61) and said electrical leads lying on the opposite side thereof; and
external connector means connected to the electrical leads from the gas sensor element and the ceramic heater for permitting electrical connections to be made thereto.

16. A gas sensor element in accordance with claim 15, including
porous heat insulating material (85) filling said test chamber within said shield member (80) and encircling the portion of the gas sensor element and ceramic heaters positioned therein.

17. A gas sensor element in accordance with claim 16, wherein
said ceramic heater (50) has an opening (58) therethrough adjacent to the resistance heating element; and including
a thermocouple (60) mounted within said opening in the ceramic heater and in physical contact with the underlying gas sensor element and having electrical leads (66,67) extending therefrom, and wherein
said external connector means is connected to the electrical leads (66,67) from the thermocouple for permitting an electrical connection to be made thereto.

18. A gas sensor element in accordance with claim 9, further comprising
a mounting collar (61) of insulating material having a central opening therethrough from one side to the opposite side thereof;
said gas sensor element (10) and said two ceramic heaters (50) being mounted in the opening of said mounting collar with a major surface of one of the ceramic heaters (50) in close physical contact with said first major surface of said gas sensor element and with a major surface of the other of the ceramic heaters in close physical contact with said second major surface of the gas sensor element;
the one end of the gas sensor element having the gas pump and the one end of each of the ceramic heaters having the resistance heating element being positioned on said one side of the mounting collar and said electrical leads from the gas sensor element and the ceramic heaters lying on said opposite side of the mounting collar;
sealing means sealing the gas sensor element (10) and ceramic heaters (50) in the opening of the mounting collar to provide a gas-tight seal of the opening;
a housing member (70) having one end in contact with said mounting collar (61) at said opposite side thereof and having another end spaced therefrom;
an electrical connector mounted at said other end of said housing member and having contacts connected to the electrical leads from the gas sensor element and the ceramic heaters and extending externally of the housing member; and
clamping means (90,91) holding said shield member (80) and said housing member (70) in physical contact with said mounting collar at said one side and at said opposite side thereof, respectively, with said shield member forming a gas-tight seal with said mounting collar.

19. A gas sensor element according to claims 15 or 18, further comprising
a shield member (80) enclosing the portions of the gas sensor element and ceramic heater positioned on said one side of the mounting collar (61), said shield member (80) being in contact with said mounting collar (61) and forming a gas-tight seal therewith;
said shield member (80) having at least one aperture therein to permit gas to be analyzed to enter the test chamber formed by the shield member and mounting collar.

## Patentansprüche

1. Ein Gasfühlelement mit:
einem Körper (10) aus einem festem Elektrolytwerkstoff, welcher in Anwesenheit eines zu erfassenden Gases eine lonenleiffähigkeit aufweist;
einer ersten Kammer (21) in dem Körper;
einem Durchtritt (31) zwischen der ersten Kammer und der Außenseite des Körpers;
und einer ersten und zweiten Elektrodeneinrichtung (25-28) mit Fahnenabschnitten,
**gekennzeichnet dadurch, daß**
eine zweite Kammer (22) im Körper von der ersten Kammer beabstandet ist;
ein Durchtritt (32) zwischen der zweiten Kammer und der Außenseite des Körpers vorhanden ist;
die erste Elektrodeneinrichtung (25, 26) einen Fahnenabschnitt gegenüber der ersten Kammer (21) aufweist;
die zweite Elektrodeneinrichtung (27, 28) einen Fahnenabschnitt gegenüber der zweiten Kammer aufweist, wobei die erste Elektrodeneinrichtung einen ersten Satz von zwei Elektroden (25, 26) aufweist und deren jeweilige Fahnenabschnitte sich über die erste Kammer hinweg gegenüberliegen;
die zweite Elektrodeneinrichtung einen zweiten Satz von zwei Elektroden (27, 28) umfaßt und deren jeweilige Fahnenabschnitte sich über die zweite Kammer hinweg gegenüberliegen; und
nach dem Anlegen einer Spannung zwischen dem ersten und dem zweiten Satz von Elektroden das zu erfassende Gas durch den dazwischen befindlichen festen Elektrolytwerkstoff hindurch aus einer Kammer (21) zur anderen (22) gepumpt wird.

2. Gasfühlelement gemäß Anspruch 1, wobei
der Körper (10) im allgemeinen ein länglicher, rechtwinkliger Quader mit einer großen Oberseite (11) und einer großen Unterseite 17) ist;
die erste Kammer (21) unterhalb der Oberseite (11) und eine zweite Kammer über der Unterseite (17), direkt unter der ersten Kammer, angeordnet ist und zwischen der ersten und der zweiten Kammer der Werkstoff des Körpers liegt;
der erste Durchtritt als eine erste Öffnung (31) ausgebildet ist, welche sich von der ersten Kammer parallel zu den großen Hauptseiten erstreckt und in eine senkrecht zu den Hauptflächen befindliche Kantenfläche mündet;
der zweite Durchtritt als eine zweite Öffnung (32) ausgebildet ist, welche sich von der zweiten Kammer parallel zu den großen Hauptseiten erstreckt und in eine senkrecht zu den Hauptflächen befindliche Kantenfläche mündet;
die beiden Elektroden (25, 26) des ersten Satzes und die beiden Elektroden (27, 28) des zweiten Satzes flach und planar sind und parallel zu den großen Flächen liegen;
eine der Elektroden (25) des ersten Satzes einen Fahnenabschnitt quer über die obere Wandfläche der ersten Kammer hinweg aufweist und die andere der Elektroden (26) des ersten Satzes einen Fahnenabschnitt quer über die untere Wandfläche der ersten Kammer hinweg aufweist; und
eine der Elektroden (27) des zweiten Satzes einen Fahnenabschnitt quer über die obere Wandfläche der zweiten Kammer hinweg aufweist und die andere der Elektroden (28) des zweiten Satzes einen Fahnenabschnitt quer über die untere Wandfläche der zweiten Kammer hinweg aufweist.

3. Gasfühlelement gemäß Anspruch 2, wobei
sich jede der Kammern (21, 22) neben einer der schmaleren Kantenflächen des Körpers befindet;
jede der Elektroden (25, 26, 27, 28) vom Fahnenabschnitt ausgeht und neben der anderen der schmaleren Kantenflächen des Körpers endet;
die beiden Elektroden des ersten Satzes dicht nebeneinander enden, um einen gemeinsamen elektrischen Anschluß (29) daran zu ermöglichen; und
die beiden Elektroden des zweiten Satzes dicht nebeneinander enden, um einen gemeinsamen elektrischen Anschluß (30) daran zu ermöglichen.

4. Gasfühlelement gemäß Anspruch 3, wobei
es sich bei dem Elektrolytwerkstoff um mit Yttriumoxid stabilisiertes Zirkondioxid handelt.

5. Gasfühlelement gemäß Anspruch 3, wobei
die Elektroden ein poröser Film aus einem leitfähigen Werkstoff sind, der die lonisierung des zu erfassenden Gases katalysiert.

6. Gasfühlelement gemäß Anspruch 5, wobei
der leitfähige Werkstoff der Elektroden Platin ist.

7. Gasfühlelement gemäß Anspruch 1 oder 3, wobei
der Körper unitär ist und aus dünnen Schichten eines festen Elektrolytwerkstoffs besteht, der bei Sauerstoff eine Ionenleitfähigkeit aufweist;
jede der dünnen Schichten im allgemeinen eine rechtwinklige Quaderform mit einer großen Oberseite und einer großen Unterseite hat;
durch die zweite Schicht von oben (12) eine Öffnung von der großen Oberseite zu deren großer Unterseite verläuft, welche die erste Kammer (21) bildet;
die oberste Schicht (11) eine Elektrode (25) aus dem ersten Satz von Elektroden (25, 26) aus einer Schicht leitfähigen Werkstoffs aufweist, welche an der großen Unterseite haftet, und die Elektrode (25) einen Fahnenabschnitt quer über die Öffnung (21) in der zweiten Schicht von oben hinweg hat;
die Schicht (13) unterhalb der zweiten Schicht von oben eine Elektrode (26) aus dem ersten Satz von Elektroden (25, 26) ) aus einer Schicht leitfähigen Werkstoffs aufweist, welche an der großen Oberseite haftet, und die Elektrode (26) einen Fahnenabschnitt quer über die Öffnung in der zweiten Schicht von oben hinweg hat;
durch die zweite Schicht von unten (16) eine Öffnung (22) von der großen Oberseite zu deren großer Unterseite verläuft, welche sich direkt unterhalb der Öffnung (21) in der zweiten Schicht von oben befindet und die zweite Kammer (22) bildet;
die unterste Schicht eine Elektrode (28) aus dem zweiten Satz von Elektroden (27, 28) aus einer Schicht leitfähigen Werkstoffs aufweist, welche an der großen Oberseite haftet, und die Elektrode (28) einen Fahnenabschnitt quer über die Öffnung in der zweiten Schicht von unten hinweg hat;
die Schicht (15) über der zweiten Schicht von unten eine Elektrode (27) aus dem zweiten Satz von Elektroden (27, 28) aus einer Schicht leitfähigen Werkstoffs aufweist, welche an der großen Unterseite haftet, und die Elektrode (27) einen Fahnenabschnitt quer über die Öffnung (22) in der zweiten Schicht von unten hinweg hat;
die erste Öffnung (31) von der ersten Kammer in der zweiten Schicht von oben (12) zu einer Kantenfläche der Schicht verläuft; und
die zweite Öffnung (32) von der zweiten Kammer in der zweiten Schicht von unten (16) zu einer Kantenfläche der Schicht verläuft.

8. Gasfühlelement gemäß Anspruch 7, wobei
die Kammern (21, 22) im allgemeinen zylinderförmig sind und einen Durchmesser von 0,44 mm (0,0175 Zoll) und eine Höhe von 0,06 mm (0,0025 Zoll) haben; und
die Öffnungen (31, 32) ungefähr einen Durchmesser von 0,4 mm (0,0015 Zoll) und von der Oberseite bis zur äußeren Kantenfläche in etwa eine Länge von 1,27 (0.05 Zoll) haben.

9. Gasfühlelement gemäß einem der Ansprüche 1 bis 8, welches weiterhin umfaßt:
zwei keramische Heizeinrichtungen mit jeweils einem Substrat (50) aus einem Siliziumnitridwerkstoff mit allgemein länglicher, rechtwinkliger Form sowie einer ersten und zweiten flachen, planaren Hauptfläche, die parallel zueinander angeordnet sind, und
eine dünne Schicht eines leitfähigen Werkstoffs (51), die an der ersten Hauptfläche des Substrats (50) musterförmig haftet und ein Widerstands-Heizelement und dessen Zuleitungen bildet;
wobei zwischen der einen keramischen Heizeinrichtung und dem Gasfühlelement (10) eine Wärmeübertragung erfolgt und die zweite Hauptfläche des Substrats der keramischen Heizvorrichtung der großen Oberseite des Körpers des Gasfühlelements gegenüberliegt; und
die andere keramische Heizeinrichtung (50) Wärme zum Gasfühlelement übertragen kann, wobei die zweite Hauptfläche des Substrats der keramischen Heizeinrichtung der großen Unterseite des Körpers des Gasfühlelements gegenüberliegt.

10. Gasfühlelement gemäß Anspruch 9 oder 3, wobei
die dünne Schicht leitfähigen Werkstoffs (51) neben einem Ende der keramischen Heizeinrichtungen angeordnet ist und die Leitungen (56, 57) vom Widerstands-Heizelement zum anderen Ende des Substrats verlaufen; und
die keramischen Heizeinrichtungen (50) mit dem Gasfühlelement (10) zusammengesetzt werden und sich das eine Ende des Substrats der keramischen Heizeinrichtungen neben der einen der schmaleren Kantenflächen des Körpers des Gasfühlelements befindet.

11. Gasfühlelement gemäß einem der Ansprüche 1 bis 8, welches desweiteren umfaßt:
eine keramische Heizeinrichtung mit einem Substrat (50) aus Siliziumnitridwerkstoff mit einer flachen, planaren Hauptfläche; und
eine dünne Schicht (51) leiffähigen Werkstoffs, die an der Hauptfläche des Substrats musterförmig haftet und ein Widerstands-Heizelement und dessen Zuleitungen bildet.

12. Gasfühlelement gemäß Anspruch 11, wobei das Substrat im allgemeinen länglich und rechtwinklig ist und die Zuleitungen vom Widerstands-Heizelement bis neben das andere Ende des Substrats verlaufen.

13. Gasfühlelement gemäß Anspruch 12, wobei
es sich bei dem Substrat der keramischen Heizeinrichtung um verdichtetes Siliziumnitrid handelt.

14. Gasfühlelement gemäß Anspruch 13, wobei
der leitfähige Werkstoff Platin ist, welches mittels Siebdruck auf die Hauptfläche des Substrat aufgebracht und anschließend eingebrannt wird.

15. Gasfühlelement gemäß Anspruch 13, welches außerdem umfaßt:
einen Befestigungsring (61) zum Halten des Gasfühlelements und der keramischen Heizeinrichtung (50), wobei zwischen beiden eine Wärmeübertragung stattfindet und das eine Ende des Körpers des Gasfühlelements und das eine Ende der keramischen Heizeinrichtung auf einer Seite des Befestigungsringes (61) angebracht sind und die elektrischen Leitungen auf dessen gegenüberliegender Seite liegen; und
externe Anschlußstücke, die mit den elektrischen Leitungen von dem Gasfühlelement und der keramischen Heizeinrichtung verbunden sind, um einen elektrischen Anschluß an sie herstellen zu können.

16. Gasfühlelement gemäß Anspruch 15 mit:
einem porösen Isolierwerkstoff (85), welcher eine Testkammer innerhalb einer Schutzeinrichtung (80) füllt und das darin befindliche Gasfühlelement und die keramischen Heizeinrichtungen umgibt.

17. Gasfühlelement gemäß Anspruch 16, wobei
die keramische Heizeinrichtung (50) eine Öffnung (58) neben dem Widerstands-Heizelement aufweist mit:
einem Thermoelement (60), welches in der Öffnung in der keramischen Heizeinrichtung angebracht ist und in Kontakt mit dem darunterliegenden Gasfühlelement ist und von ihm ausgehende elektrische Leitungen (66, 67) hat, und wobei
ein externes Anschlußstück mit den elektrischen Leitungen (66, 67) vom Thermoelement verbunden ist, um einen elektrischen Anschluß an dieses zu ermöglichen.

18. Gasfühlelement gemäß Anspruch 9, welches desweiteren umfaßt:
einen Befestigungsring (61) aus einem Isolierwerkstoff mit einer Mittelöffnung von einer Seite zur gegenüberliegenden Seite;
wobei das Gasfühlelement (10) und die beiden keramischen Heizeinrichtungen (50) in der Öffnung des Befestigungsringes angebracht sind und eine Hauptfläche von einer der keramischen Heizeinrichtungen (50) in engem Kontakt zur ersten großen Seite des Gasfühlelements steht und eine Hauptfläche von der anderen keramischen Heizeinrichtung in engem Kontakt zur zweiten großen Seite des Gasfühlelements steht;
wobei das eine Ende des Gasfühlelements mit der Gaspumpe und das eine Ende jeder keramischen Heizeinrichtung mit dem Widerstands-Heizelement auf der einen Seite des Befestigungsrings angebracht sind und die elektrischen Leitungen vom Gasfühlelement und den keramischen Heizeinrichtungen auf der gegenüberliegenden Seite des Befestigungsrings liegen;
eine Abdichteinrichtung, welche das Gasfühlelement (10) und die keramischen Heizeinrichtungen (50) in der Öffnung des Befestigungsringes abdichten, um einen gasdichten Verschluß der Öffnung zu schaffen;
ein Gehäuse (70) mit einem Ende, welches den Befestigungsring (61) an dessen gegenüberliegenden Seite berührt, und einem davon beabstandeten anderen Ende;
ein elektrisches Anschlußstück, welches an dem anderen Ende des Gehäuses befestigt ist und Kontakte aufweist, die an die elektrischen Leitungen von dem Gasfühlelement und den keramischen Heizeinrichtungen angeschlossen sind und sich aus dem Gehäuse nach außen erstrecken; und
Klemmeinrichtungen (90, 91), welche die Schutzeinrichtung (80) und das Gehäuse (70) am Befestigungsring auf dessen beiden Seiten festspannen, wobei eine Schutzeinrichtung einen gasdichten Verschluß mit dem Befestigungsring bildet.

19. Gasfühlelement gemäß einem der Ansprüche 15 oder 18, welches außerdem umfaßt:
eine Schutzeinrichtung (80), welche die Abschnitte des Gasfühlelements und der keramischen Heizeinrichtung auf der einen Seite des Befestigungsringes (61) umgibt, wobei sie den Befestigungsring (61) berührt und mit diesem einen gasdichten Verschluß bildet;
wobei die Schutzeinrichtung (80) mindestens eine Öffnung aufweist, so daß das zu analysierende Gas in die Testkammer eintreten kann, welche aus der Schutzeinrichtung und dem Befestigungsring gebildet wird.

## Revendications

1. Elément de détection de gaz comprenant :
un corps (10) en un matériau d'électrolyte solide présentant une conduction ionique en présence d'un gaz devant être détecté ;
une première chambre (21) à l'intérieur du dit corps ;
un passage (31) entre la dite première chambre et l'extérieur du corps ;
et des premier et deuxième moyens d'électrodes (25-28) présentant des parties en forme d'oreille ;
caractérisé par
une deuxième chambre (22) à l'intérieur du dit corps et espacée de la dite première chambre ;
un passage (32) entre la dite deuxième chambre et l'extérieur du corps ;
le dit premier moyen d'électrodes (25, 26) présentant une partie en forme d'oreille en regard de la dite première chambre (21) ;
le dit deuxième moyen d'électrodes (27, 28) présentant une partie en forme d'oreille en regard de la dite deuxième chambre,
de telle manière que
le dit premier moyen d'électrodes inclut un premier ensemble de deux électrodes (25, 26), une partie en forme d'oreille de chacune étant en regard l'une de l'autre à travers la dite première chambre ;
le dit deuxième moyen d'électrodes inclut un deuxième ensemble de deux électrodes (27, 28), une partie en forme d'oreille de chacune étant en regard l'une de l'autre à travers la dite deuxième chambre ; et
le dit gaz étant pompé d'une chambre (21) vers l'autre (22) à travers le matériau d'électrolyte solide intermédiaire lors de l'application d'une tension entre le dit premier ensemble d'électrodes et le dit deuxième ensemble d'électrodes.

2. Elément de détection de gaz selon la revendication 1 dans lequel :
le dit corps (10) affecte une forme générale parallélépipèdique rectangulaire avec une paroi supérieure principale (11) et une surface inférieure principale (17) ;
la dite première chambre (21) est disposée sous la dite paroi supérieure (11), et la dite deuxième chambre est disposée au-dessus de la dite paroi inférieure (17) et directement au-dessous de la dite première chambre, le matériau du dit corps intermédiaire étant disposé entre les dites première et deuxième chambres ;
le dit premier passage est constitué par un premier orifice (31) qui s'étend à partir de la dite première chambre parallèlement aux dites parois principales et se termine à une paroi de bord perpendiculaire aux dites parois principales ;
le dit deuxième passage est constitué par un deuxième orifice (32) qui s'étend à partir de la dite deuxième chambre parallèlement aux dites parois principales et se termine à une paroi de bord perpendiculaire aux dites parois principales ;
les dites deux électrodes (25, 26) du dit premier ensemble et les dites deux électrodes (27, 28) du dit deuxième ensemble sont plates et planes et sont parallèles aux dites parois principales ;
une des électrodes (25) du dit premier ensemble a sa partie en forme d'oreille disposée à travers la paroi supérieure de la dite première chambre, et l'autre des électrodes (26) du dit premier ensemble a sa partie en forme d'oreille disposée à travers la paroi inférieure de la dite première chambre ; et
une des électrodes (27) du dit deuxième ensemble a sa partie en forme d'oreille disposée à travers la paroi supérieure de la dite deuxième chambre, et l'autre des électrodes (28) du dit deuxième ensemble a sa partie en forme d'oreille disposée à travers la paroi inférieure de la dite deuxième chambre.

3. Elément de détection de gaz selon la revendication 2 dans lequel :
chacune des dites chambres (21, 22) est disposée de façon adjacente à une des plus fines des parois de bord du dit corps ;
chacune des dites électrodes (25, 26, 27, 28) s'étend à partir de la dite partie en forme d'oreille et se termine de façon adjacente à l'autre des plus fines des parois de bord du dit corps ;
les deux électrodes du premier ensemble se terminent de façon très proche l'une de l'autre pour permettre de réaliser une connexion électrique commune (29) entre elles ; et
les deux électrodes du deuxième ensemble se terminent de façon très proche l'une de l'autre pour permettre de réaliser une connexion électrique commune (30) entre elles.

4. Elément de détection de gaz selon la revendication 3 dans lequel le dit matériau d'électrolyte solide est du zircone stabilisé à l'yttria.

5. Elément de détection de gaz selon la revendication 3 dans lequel les dites électrodes sont constituées par un film poreux d'un matériau conducteur qui catalyse l'ionisation du gaz à détecter.

6. Elément de détection de gaz selon la revendication 5 dans lequel le dit matériau conducteur des dites électrodes est du platine.

7. Elément de détection de gaz selon la revendication 1 ou 3 dans lequel :
le dit corps est un corps unitaire (10) constitué de lamelles d'un matériau d'électrolyte solide qui conduit ioniquement l'oxygène;
chacune des dites lamelles affectant une forme générale parallélépipèdique rectangulaire ayant une paroi supérieure principale et une paroi inférieure principale ;
la lamelle (12) suivant immédiatement la lamelle supérieure présentant une ouverture la traversant à partir de sa paroi supérieure principale jusqu'à sa paroi inférieure principale et définissant la dite première chambre (21) ;
la lamelle supérieure (11) ayant une électrode (25) du dit premier ensemble d'électrodes (25, 26) d'une couche d'un matériau conducteur adhérant à sa paroi inférieure principale, la dite électrode (25) ayant la dite partie en forme d'oreille disposée à travers la dite ouverture (21) pratiquée dans la lamelle suivant immédiatement la lamelle supérieure ;
la lamelle (13) juste au-dessous la lamelle suivant immédiatement la lamelle supérieure ayant une électrode (26) du dit premier ensemble d'électrodes (25, 26) d'une couche d'un matériau conducteur adhérant à sa paroi supérieure principale, la dite électrode (26) ayant une partie en forme d'oreille disposée à travers la dite ouverture pratiquée dans la lamelle suivant immédiatement la lamelle supérieure;
la lamelle (16) suivant immédiatement la lamelle supérieure présentant une ouverture (22) la traversant à partir de sa paroi supérieure principale jusqu'à sa paroi inférieure principale et pratiquée directement au-dessous de la dite ouverture (22) pratiquée dans la lamelle suivant immédiatement la lamelle supérieure, définissant la dite deuxième chambre (22) ;
la lamelle inférieure ayant une électrode (28) du deuxième ensemble d'électrodes (27, 28) constituée d'une couche adhérente d'un matériau conducteur adhérant à sa paroi supérieure principale, la dite électrode (28) ayant une partie en forme d'oreille disposée à travers la dite ouverture pratiquée dans lamelle suivant immédiatement la lamelle inférieure ;
la lamelle (15) juste au-dessus de la lamelle suivant immédiatement la lamelle inférieure ayant une électrode (27) d'une couche du dit deuxième ensemble d'électrodes (27, 28) d'un matériau conducteur adhérant à sa paroi inférieure principale, la dite électrode (27) ayant une partie en forme d'oreille disposée à travers la dite ouverture (22) pratiquée dans la lamelle suivant immédiatement la lamelle inférieure ;
le dit premier orifice (31) s'étendant à partir de la dite première chambre pratiquée dans la lamelle (12) suivant immédiatement la lamelle supérieure jusqu'à une paroi de bord de la lamelle ; et
le dit deuxième orifice (32) s'étendant à partir de la dite deuxième chambre pratiquée dans lamelle (16) suivant immédiatement la lamelle inférieure jusqu'à une paroi de bord de la lamelle.

8. Elément de détection de gaz selon la revendication 7 dans lequel :
les dites chambres (21, 22) sont de forme générale cylindrique d'un diamètre de 0,44 mm environ (0,0175 pouce) et de 0,06 mm (0,0025 pouce) de hauteur ; et
les dits orifices (31, 32) ont un diamètre de 0,04 mm (0,0015 pouce) environ et une longueur de 1,27 mm (0,05 pouce) environ à partir de l'ouverture jusqu'à la paroi de bord extérieure.

9. Elément de détection de gaz selon l'une quelconque des revendications 1 à 8 comprenant, en outre :
deux radiateurs céramiques (50) comprenant chacun un substrat (50) dans un matériau de nitrure de silicium affectant une forme générale rectangulaire allongée ayant des première et deuxième parois principales plates et planes, et
une fine couche d'un matériau conducteur (51) adhérant à la dite première paroi principale du substrat (50) en un motif destiné à former un élément de chauffage par résistance et les conducteurs de celui-ci ;
un des dits radiateurs céramiques étant assemblé en relation avec le dit élément de détection de gaz (10) pour une transmission de la chaleur, la deuxième paroi principale du substrat du radiateur céramique étant en regard de la paroi supérieure principale du corps de l'élément de détection de gaz ; et
l'autre des dits radiateurs céramiques (50) étant assemblé en relation avec le dit élément de détection de gaz pour une transmission de la chaleur, la deuxième paroi principale du substrat du radiateur céramique étant en regard de la paroi inférieure principale du corps de l'élément de détection de gaz.

10. Elément de détection de gaz selon la revendication 9 ou 3 dans lequel :
la dite couche fine du matériau conducteur (51) est adjacente à une extrémité de ses radiateurs céramiques et les dits conducteurs (56, 57) s'étendant à partir de l'élément de chauffage par résistance jusqu'à l'autre extrémité du substrat ; et
les dits radiateurs céramiques (50) étant assemblés avec le dit élément de détection de gaz (10), la dite une extrémité des substrats des radiateurs céramiques étant positionnée de façon adjacente à la dite une des plus fines des parois de bord du corps de l'élément de détection de gaz.

11. Elément de détection de gaz selon l'une quelconque des revendications 1 à 8 comprenant, en outre, un radiateur céramique ayant un substrat (50) en un matériau de nitrure de silicium ayant une paroi principale plate et plane ; et
une couche fine (51) d'un matériau conducteur adhérant à la dite paroi principale du substrat dans un motif destiné à former un élément de chauffage par résistance et les conducteurs de celui-ci.

12. Elément de détection de gaz selon la revendication 11 dans lequel le dit substrat affecte une forme générale rectangulaire allongée et les conducteurs s'étendent à partir de l'élément de chauffage par résistance adjacent à l'autre extrémité du substrat.

13. Elément de détection de gaz selon la revendication 12 dans lequel le dit substrat du dit radiateur céramique est réalisé dans du nitrure de silicium densifié.

14. Elément de détection de gaz selon la revendication 13 dans lequel le dit matériau conducteur est du platine tamisé et brûlé sur la dite paroi principale du substrat.

15. Elément de détection de gaz selon la revendication 13 comprenant,en outre :
une frette de montage (61) portant le dit élément de détection de gaz et le dit radiateur céramique (50), le dit radiateur céramique étant en relation de transmission de la chaleur avec le dit élément de détection des gaz (10), la dite une extrémité du dit corps du dit élément de détection de gaz et la dite une extrémité du radiateur céramique étant positionnées sur un côté de la dite frette de montage (61) et les dits conducteurs électriques sur son côté opposé ; et
un moyen de connexion externe connecté aux conducteurs électriques à partir de l'élément de détection de gaz et le radiateur céramique pour permettre de réaliser ses connexions électriques.

16. Elément de détection de gaz selon la revendication 15 incluant un matériau poreux d'isolation thermique (85) remplissant la dite chambre de réaction à l'intérieur du dit élément d'écran (80) et encerclant la partie de l'élément de détection de gaz et les radiateurs céramiques disposés dedans.

17. Elément de détection de gaz selon la revendication 16 dans lequel :
le dit radiateur céramique (50) a une ouverture (58) le traversant de façon adjacente au dit élément de chauffage par résistance ; et incluant
un thermocouple (60) monté à l'intérieur de la dite ouverture dans le radiateur céramique et en contact physique avec l'élément de détection de gaz sous-jacent et ayant des conducteurs électriques (66, 67) qui ont font saillie, et dans lequel
le dit moyen de connexion externe est connecté aux conducteurs électriques (66, 67) à partir du thermocouple pour permettre de réaliser une connexion électrique avec lui.

18. Elément de détection de gaz selon la revendication 9 comprenant, en outre :
une frette de montage (61) en un matériau isolant présentant une ouverture centrale le traversant d'un côté à son côté opposé ;
le dit élément de détection de gaz (10) et les dits deux radiateurs céramiques (50) étant montés dans l'ouverture de la dite frette de montage, une paroi principale d'un des dits radiateurs céramiques (50) étant en étroit contact physique avec la dite première paroi principale du dit élément de détection de gaz, et une paroi principale de l'autre des radiateurs céramiques étant en étroit contact physique avec la dite deuxième paroi principale de l'élément de détection de gaz ;
la une extrémité de l'élément de détection de gaz ayant la pompe à gaz et la une extrémité de chacun des radiateurs céramiques ayant un élément de chauffage par résistance qui est disposé sur le dit un côté de la frette de montage et les dits conducteurs électriques à partir de l'élément de détection de gaz et des radiateurs céramiques reposant sur le dit côté opposé de la dite frette de montage ;
un moyen d'étanchéité isolant l'élément de détection de gaz (10) et les radiateurs céramiques (50) dans l'ouverture de la frette de montage pour déterminer un scellement étanche aux gaz pour l'ouverture;
un élément de boîtier (70) ayant une extrémité en contact avec la dite frette de montage (61) au dit côté opposé de celle-ci et ayant une autre extrémité séparée de celle-ci ;
un connecteur électrique monté à la dite autre extrémité du dit élément de boîtier et ayant des contacts connectés aux conducteurs électriques à partir de l'élément de détection de gaz et des radiateurs céramiques et faisant saillie à l'extérieur de l'élément de boîtier ; et
des moyens de fixation (90, 91) portant le dit élément d'écran (80) et le dit élément de boîtier (70) en contact physique avec la dite frette de montage au dit un côté et au dit côté opposé de celle-ci, respectivement, le dit élément d'écran formant un scellement étanche aux gaz avec la dite frette de montage.

19. Elément de détection de gaz selon la revendication 15 ou 18 comprenant, en outre :
un élément d'écran (80) enfermant les parties de l'élément de détection de gaz et le radiateur céramique disposé sur le dit un côté de la frette de montage (61), le dit élément d'écran (80) étant en contact avec la dite frette de montage (61) et formant un scellement étanche aux gaz avec celui-ci ;
le dit élément d'écran (80) présentant au moins une ouverture pour permettre au gaz à analyser d'entrer dans la chambre de réaction formée par l'élément d'écran et la frette de montage.
